# EUROPEAN PATENT APPLICATION

(11) **EP 3 062 098 A1**
(43) Date of publication of application: **31.08.2016**
(21) Application number: 14856412.3
(22) Date of filing: 22.10.2014
(51) Int. Cl.: G01N 27/404

(54) **POTENTIOSTATIC ELECTROLYTIC GAS SENSOR**

(30) Priority: 25.10.2013 JP 2013221727; 25.10.2013 JP 2013221728; 25.10.2013 JP 2013221729
(71) Applicant: Riken Keiki Co., Ltd., Tokyo 174-8744 (JP)
(72) Inventor: UESUGI, Shinji, Tokyo 174-8744 (JP); UCHIKOSHI, Shouichi, Tokyo 174-8744 (JP); DAIKUHARA, Kenji, Tokyo 174-8744 (JP)
(74) Representative: Grünecker Patent- und Rechtsanwälte PartG mbB
(86) International application number: PCT/JP2014/078032
(87) International publication number: WO 2015/060328

(57) **Abstract**

Provided is a potentiostatic electrolytic gas sensor that can perform gas detect with high reliability. In the potentiostatic electrolytic gas sensor, a working electrode and a counter electrode are provided inside a casing with an electrolytic solution interposed therebetween. A working electrode lead member is drawn out of the casing at one end, and electrically connected to the working electrode at the other end. A counter electrode lead member is drawn out of the casing at one end and electrically connected to the counter electrode at the other end. The potentiostatic electrolytic gas sensor is characterized in that at least one of the working electrode lead member and the counter electrode lead member is made of a metal selected from gold, tungsten, niobium, and tantalum.

## Description

### TECHNICAL FIELD

The present invention relates to a potentiostatic electrolytic gas sensor.

### BACKGROUND ART

There are conventionally known potentiostatic electrolytic gas sensors that have a casing for containing an electrolytic solution and a gas-permeable hydrophobic membrane placed over a window formed in the casing. An object gas containing a gas to be detected is permeable through the gas-permeable hydrophobic membrane (for example, refer to Patent Literature 1). The potentiostatic electrolytic gas sensors of a certain type have a working electrode formed on the gas-permeable hydrophobic membrane on the side of the electrolytic solution, a counter electrode disposed a certain distance away from the working electrode, and a reference electrode disposed away from each of the working electrode and the counter electrode. The potentiostatic electrolytic gas sensor is configured so as to control by a potentiostat to produce a certain potential difference between the working electrode and the reference electrode and to keep the working electrode at a certain potential to produce a reduction reaction or an oxidation reaction thereat, and at the same time, to detect an electrolytic current that flows between the working electrode and the counter electrode in accordance with the concentration of the gas to be detected contained in the object gas. That is to say, the potentiostatic electrolytic gas sensors having the reference electrode detect the concentration of the gas to be detected with respect to the electrode potential of the reference electrode.

In the potentiostatic electrolytic gas sensors, the reference electrode is made by firing fine particles of a metal (platinum (Pt) or gold (Au), in the concrete) insoluble in the electrolytic solution, a mixture of fine particles of these metals, fine particles of an alloy of these materials, or the like together with a binder.

The potentiostatic electrolytic gas sensors generally have lead members, which are each drawn out of the casing at one end and electrically connected to each of the working electrode, the counter electrode, and the reference electrode at the other end. As the lead members, wires made of platinum (Pt) are used.

However, the potentiostatic electrolytic gas sensors have the problem that gas detection with high reliability could not be performed for the reason that the reference electrode or the lead members is formed of platinum.

The reasons for the problem will be described below.

The electrode potential of the reference electrode made of platinum largely varies by interference of miscellaneous gases other than the gas to be detected contained in an environmental atmosphere (object gas) in space to be detected, more specifically, a hydrogen gas, alcohol gases (for example, an ethanol gas), a carbon monoxide gas, sulfur compound gases (for example, a hydrogen sulfide gas), and the like. Thus, in the potentiostatic electrolytic gas sensors having the reference electrode made of platinum, the potential of the reference electrode being a reference varies depending on the composition of the object gas, thus impairing accurate gas sensitivity, that is, high index accuracy.

In addition, the lead members made of platinum are active to various gases such as a hydrogen gas, alcohol gases (for example, an ethanol gas), a carbon monoxide gas, sulfur compound gases (for example, a hydrogen sulfide gas), and nitrogen compound gases (for example, a nitrogen monoxide gas). Thus, in the potentiostatic electrolytic gas sensors having the lead members made of platinum, various detriments occur by the effect of the miscellaneous gases contained in the environmental atmosphere (object gas) in the space to be detected, thus impairing accurate gas sensitivity, that is, high index accuracy.

To be more specific, for example, the working electrode lead member that is electrically connected to the working electrode comes into contact with the miscellaneous gases at a casing inside portion situated inside the casing, so that a reaction occurs at the casing inside portion. This causes an index error in the potentiostatic electrolytic gas sensors.

The reference electrode lead member that is electrically connected to the reference electrode comes into contact with the miscellaneous gases at a casing inside portion situated inside the casing, and this causes the state change of an interface between the reference electrode lead member and the electrolytic solution at the casing inside portion. Thus, since the electrode potential of the reference electrode as a reference varies, an appropriate voltage cannot be applied to the working electrode.

Furthermore, in the potentiostatic electrolytic gas sensors, there are cases where, depending on the type of the gas to be detected, a produced gas is generated by an oxidation-reduction reaction at the counter electrode, and where a produced gas is generated by an oxidation-reduction reaction at the counter electrode lead member. Since the produced gases/gas generated at both or one of the counter electrode and the counter electrode lead member come/comes into contact with the casing inside portion of the working electrode lead member, a reaction occurs at the casing inside portion and causes an electrolytic current to flow between the working electrode and the counter electrode without the presence of the gas to be detected. In this case, an index error occurs, and high index accuracy cannot be obtained thereby.

To be more specific, when the gas to be detected is an oxygen gas, that is, when the potentiostatic electrolytic gas sensor is a potentiostatic electrolytic oxygen gas sensor, the oxygen gas (gas to be detected) contained in the object gas is reduced at the working electrode, and in association with this the electrolysis of water occurs at the counter electrode. At the counter electrode, the same kind of gas as the gas to be detected, that is, an oxygen gas is generated as a produced gas due to the electrolysis of water. Since platinum is used as a material for the working electrode lead member, the produced gas generated at the counter electrode comes into contact with the casing inside portion of the working electrode lead member and causes a reaction (oxidation reaction) thereat. This causes an electrolytic current to flow between the working electrode and the counter electrode without the presence of the gas to be detected.

### CITATION LIST

### PATENT LITERATURE

Patent Literature 1: International Publication WO 2010/024076

### SUMMARY OF INVENTION

### Technical Problem

The present invention has been made on the circumstances described above, as the results of studies by the inventors of the present invention on constituent materials for the electrodes and the lead members. An object of the present invention is to provide a potentiostatic electrolytic gas sensor that can perform gas detection with high reliability.

### Solution to Problem

A first potentiostatic electrolytic gas sensor according to the present invention includes a working electrode and a counter electrode provided inside a casing with an electrolytic solution interposed therebetween; a working electrode lead member that is drawn out of the casing at one end and electrically connected to the working electrode at the other end; and a counter electrode lead member that is drawn out of the casing at one end and electrically connected to the counter electrode at the other end.

The potentiostatic electrolytic gas sensor is characterized in that at least one of the working electrode lead member and the counter electrode lead member is made of a metal selected from gold, tungsten, niobium, and tantalum.

In the first potentiostatic electrolytic gas sensor according to the present invention, the working electrode lead member may preferably be made of a metal selected from gold, tungsten, niobium, and tantalum.

A first potentiostatic electrolytic gas sensor according to the present invention includes a working electrode, a counter electrode, and a reference electrode provided inside a casing with an electrolytic solution interposed among the electrodes; and a reference electrode lead member that is drawn out of the casing at one end and electrically connected to the reference electrode at the other end.

The first potentiostatic electrolytic gas sensor is characterized in that the reference electrode lead member is made of a metal selected from gold, tungsten, niobium, and tantalum.

In the first potentiostatic electrolytic gas sensor according to the present invention, a gas to be detected may preferably be an oxygen gas, and
the working electrode may preferably be made of metal black selected from platinum black and gold black.

In the first potentiostatic electrolytic gas sensor according to the present invention, the reference electrode may preferably be provided inside the casing with the electrolytic solution interposed between the working electrode and the reference electrode and between the counter electrode and the reference electrode;
a reference electrode lead member may preferably be drawn out of the casing at one end, and electrically connected to the reference electrode at the other end; and
the reference electrode may preferably be made of a material selected from iridium, an iridium oxide, ruthenium, a ruthenium oxide, and a platinum oxide.

The reference electrode lead member may preferably be made of a metal selected from tantalum, gold, tungsten, and niobium.

The counter electrode may preferably be made of an iridium oxide.

A second potentiostatic electrolytic gas sensor according to the present invention includes a working electrode, a counter electrode, and a reference electrode provided inside a casing with an electrolytic solution interposed among the electrodes.

The second potentiostatic electrolytic gas sensor is characterized in that the reference electrode is made of a material selected from iridium, an iridium oxide, ruthenium, a ruthenium oxide, and a platinum oxide.

The second potentiostatic electrolytic gas sensor according to the preset invention may preferably include a reference electrode lead member that is drawn out of the casing at one end and electrically connected to the reference electrode at the other end. The reference electrode lead member may preferably be made of a metal selected from tantalum, gold, tungsten, and niobium.

### ADVANTAGEOUS EFFECTS OF INVENTION

In the first potentiostatic electrolytic gas sensor according to the present invention, at least one of the working electrode lead member and the counter electrode lead member and/or the reference electrode lead member are/is made of the specific metal. This specific metal is, when being used for the lead member, inert or inactive to various gases such as miscellaneous gases other than a gas to be detected contained in an environmental atmosphere (object gas) in space to be detected and a produced gas generated by the occurrence of an oxidation-reduction reaction at the counter electrode in the casing. Especially when the specific metal is used for the counter electrode lead member, under voltage conditions where an oxidation-reduction reaction may occur at the counter electrode, such an oxidation-reduction reaction is hard to produce with the specific metal.

Accordingly, in the first potentiostatic electrolytic gas sensor, even if the lead member made of the specific metal comes into contact with the miscellaneous gases contained in the object gas and/or the produced gas generated at the counter electrode and the like in the casing, it is possible to prevent or reduce the occurrence of a detriment, for example, the occurrence of an index error owing to the effect of the miscellaneous gases or the produced gas on the lead member. In addition, since an oxidation-reduction reaction hardly occurs and a produced gas is hardly generated at the counter electrode lead member made of the specific metal, it is possible to reduce the occurrence of an index error caused by the occurrence of the oxidation-reduction reaction at the counter electrode lead member. As a result, accurate gas sensitivity, that is, high index accuracy can be obtained.

Thus, the first potentiostatic electrolytic gas sensor of the present invention is capable of performing gas detection with high reliability irrespective of the composition of the object gas.

In the second potentiostatic electrolytic gas sensor of the present invention, the specific material is used as an electrode material for the reference electrode. The specific material exhibits conductivity when being used as the electrode material of the reference electrode, and has superior potential stability so as to keep the electrode potential of the reference electrode at substantially constant even when coming into contact with the miscellaneous gases other than the gas to be detected contained in the object gas. Therefore, a voltage (overvoltage) required to be applied to the working electrode to cause an oxidation-reduction reaction of the working electrode becomes substantially constant, irrespective of the composition of the object gas, thus bringing about accurate gas sensitivity, that is, high index accuracy.

Accordingly, the second potentiostatic electrolytic gas sensor allows gas detection with high reliability irrespective of the composition of the object gas.

In the second potentiostatic electrolytic gas sensor of the present invention, since the reference electrode lead member is made of the specific metal, the reference electrode lead member is inert or inactive to the various gases such as the miscellaneous gases contained in the object gas. Thus, even if the miscellaneous gases contained in the object gas come into contact with a portion of the reference electrode lead member situated inside the casing, a voltage required to be applied to the working electrode becomes substantially constant, irrespective of the composition of the object gas. Thus, the occurrence of the index error is further reduced, and thereby it is possible to obtain high index accuracy and perform gas detection with higher reliability.

### BRIEF DESCRIPTION OF DRAWINGS

[FIG. 1] is an explanatory view schematically showing an example of the structure of a potentiostatic electrolytic gas sensor according to the present invention.
[FIG. 2] is an explanatory sectional view showing another example of the structure of the potentiostatic electrolytic gas sensor according to the present invention.
[FIG. 3] is an explanatory view schematically showing the structure of an experiment device used in an experimental example 1.
[FIG. 4] is a graph showing the relationship between the spontaneous potential of a platinum wire and elapsed time obtained in the experimental example 1.
[FIG. 5] is a graph showing the relationship between the spontaneous potential of a gold wire and elapsed time obtained in the experimental example 1.
[FIG. 6] is a graph showing the relationship between the spontaneous potential of a tungsten wire and elapsed time obtained in the experimental example 1.
[FIG. 7] is a graph showing the relationship between the spontaneous potential of a tantalum wire and elapsed time obtained in the experimental example 1.
[FIG. 8] is a graph showing the relationship between the spontaneous potential of a niobium wire and elapsed time obtained in the experimental example 1.
[FIG. 9] is an explanatory view that schematically shows the structure of an experiment device used in an experimental example 2.
[FIG. 10] is a graph showing the relationship between the potential of a platinum black electrode with respect to that of a mercury sulfate electrode and elapsed time obtained in the experimental example 2.
[FIG. 11] is a graph showing the relationship between the potential of an iridium oxide electrode with respect to that of the mercury sulfate electrode and elapsed time obtained in the experimental example 2.
[FIG. 12] is a graph showing the relationship between the potential of a ruthenium oxide electrode with respect to that of the mercury sulfate electrode and elapsed time obtained in the experimental example 2.
[FIG. 13] is a graph showing the relationship between the potential of a platinum black electrode with respect to that of a mercury sulfate electrode and elapsed time obtained in an experimental example 3.
[FIG. 14] is a graph showing the relationship between the potential of a platinum monoxide electrode with respect to that of the mercury sulfate electrode and elapsed time obtained in the experimental example 3.
[FIG. 15] is a graph showing the relationship between the potential of a ruthenium electrode with respect to that of the mercury sulfate electrode and elapsed time obtained in the experimental example 3.
[FIG. 16] is a graph showing the relationship between the potential of an iridium electrode with respect to that of the mercury sulfate electrode and elapsed time obtained in the experimental example 3.
[FIG. 17] is a graph showing the relationship between a voltage to be applied to a counter electrode and the elapsed number of days obtained in an experimental example 4.

### DESCRIPTION OF EMBODIMENTS

A potentiostatic electrolytic gas sensor according to the present invention is characterized in that at least one of a working electrode lead member, a counter electrode lead member, and a reference electrode and a reference electrode lead member provided as necessary is made of a specific material other than platinum.

In the potentiostatic electrolytic gas sensor according to the present invention, when the reference electrode is made of a specific material other than platinum, the reference electrode lead member, in addition to the reference electrode, may also preferably be made of a specific material other than platinum.

Moreover, in the potentiostatic electrolytic gas sensor according to the present invention, when a gas to be detected is an oxygen gas, it is preferable that the working electrode lead member is made of a specific material other than platinum and the working electrode is made of platinum black or gold black.

The potentiostatic electrolytic gas sensor according to the present invention will be described below.

### <First Potentiostatic Electrolytic Gas Sensor>

A first potentiostatic electrolytic gas sensor according to the present invention is characterized in that at least one of a working electrode lead member, a counter electrode lead member, and a reference electrode lead member provided as necessary is made of a specific material other than platinum.

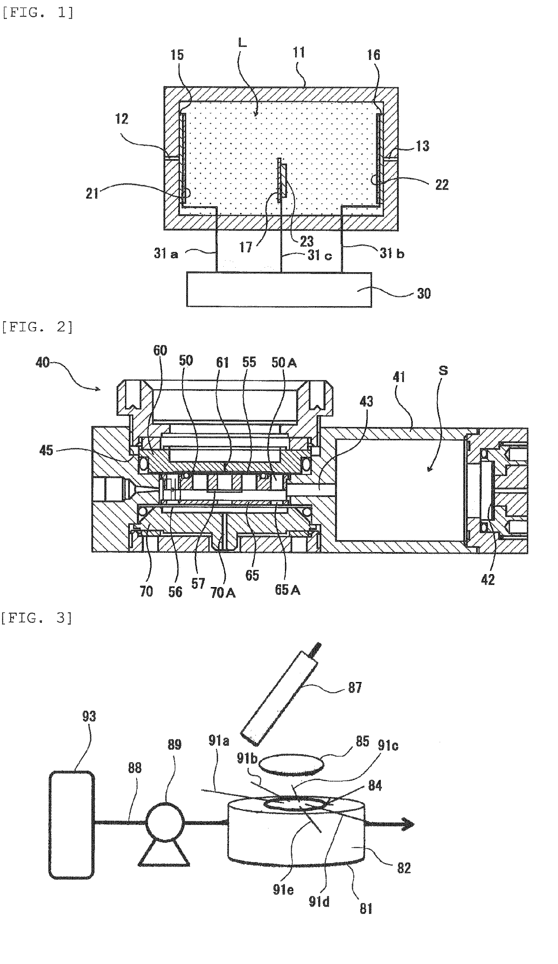

The first potentiostatic electrolytic gas sensor according to the present invention will be hereinafter described with reference to FIG. 1.

FIG. 1 is an explanatory view showing an example of the structure of the first potentiostatic electrolytic gas sensor according to the present invention.

The first potentiostatic electrolytic gas sensor is provided with a cylindrical casing 11, which has a gas inlet through hole 12 at one end (left end in Fig. 1) for introducing an object gas containing a gas to be detected therein and a gas outlet through hole 13 at the other end (right end in Fig. 1). A one end-side gas-permeable hydrophobic membrane 15 is placed on the inner surface of the casing 11 at one end so as to cover the gas inlet through hole 12 from inside. The other end-side gas-permeable hydrophobic membrane 16 is placed on the inner surface of the casing 11 at the other end so as to cover the gas outlet through hole 13 from inside. Thus, the casing 11 forms an electrolytic solution reservoir therein to contain an electrolytic solution L consisting of, for example, a sulfuric acid in a liquid tight manner.

In the casing 11, in addition to the electrolytic solution L contained therein, a working electrode 21, a counter electrode 22, and a reference electrode 23 are immersed in the electrolytic solution L in the state of being in contact with the electrolytic solution L, and the electrolytic solution L is interposed among the electrodes. To be more specific, the working electrode 21 is disposed on the inner surface of the one end-side gas-permeable hydrophobic membrane 15 on the side being in contact with the solution. The counter electrode 22 is disposed on the inner surface of the other end-side gas-permeable hydrophobic membrane 16 on the side being in contact with the solution. The reference electrode 23 is provided on one surface of a gas-permeable porous membrane 17 made of, for example, a fluorine resin such as polytetrafluoroethylene (PTFE) in a position away from each of the working electrode 21 and the counter electrode 22.

In the example of the drawing, the reference electrode 23 is opposite to the counter electrode 22 through the electrolytic solution L, and is opposite to the working electrode 21 across the electrolytic solution L and the gas-permeable porous membrane 17.

In the first potentiostatic electrolytic gas sensor, the working electrode 21, the counter electrode 22, and the reference electrode 23 are electrically connected to a controller 30 comprising a potentiostat, for example, through a working electrode lead member 31a, a counter electrode lead member 31b, and a reference electrode lead member 31c, respectively. Note that, in a case where the potentiostat is used as the controller 30, a working electrode connector of the potentiostat is electrically connected to the working electrode 21, a counter electrode connector of the potentiostat is electrically connected to the counter electrode 22, and a reference electrode connector of the potentiostat is electrically connected to the reference electrode 23.

The controller 30 applies a voltage of a predetermined level to the working electrode 21 such that a constant potential difference occurs between the working electrode 21 and the reference electrode 23, and the working electrode 21 has a potential at which an oxidation-reduction reaction occurs.

The casing 11 is made of, for example, a resin such as polycarbonate, vinyl chloride, polyethylene, polypropylene, or polytetrafluoroethylene (PTFE).

The one end-side gas-permeable hydrophobic membrane 15 and the other end-side gas-permeable hydrophobic membrane 16 having gas permeability and water repellency permit the passage of gases including the object gas and a produced gas generated at the counter electrode 22 by an oxidation-reduction reaction, but prohibit the passage of the electrolytic solution L.

As examples of the one end-side gas-permeable hydrophobic membrane 15 and the other end-side gas-permeable hydrophobic membrane 16, may be mentioned porous membranes made of a fluorine resin such as polytetrafluoroethylene (PTFE).

The porous membranes constituting the one end-side gas-permeable hydrophobic membrane 15 and the other end-side gas-permeable hydrophobic membrane 16 may preferably have a Gurley number of 3 to 3000 seconds. The concrete structure of the porous membranes including a thickness, a porosity, and the like is determined such that the Gurley number falls within the above numerical range.

To be more specific, the porous membranes for constituting the one end-side gas-permeable hydrophobic membrane 15 and the other end-side gas-permeable hydrophobic membrane 16 may preferably have a porosity of 10 to 70% and a thickness of 0.01 to 1 mm.

The working electrode 21, which is formed on, for example, the surface of the one end-side gas-permeable hydrophobic membrane 15, is constituted of an electrode catalyst layer having a thickness of, for example, 50 to 300 µm.

The electrode catalyst layer constituting the working electrode 21 is formed by firing fine particles of a metal insoluble in the electrolytic solution L, fine particles of an oxide of the metal, fine particles of an alloy of the metal, a mixture of these fine particles, or the like together with a binder.

The counter electrode 22, which is formed on, for example, the surface of the other end-side gas-permeable hydrophobic membrane 16, is constituted of an electrode catalyst layer having a thickness of, for example, 10 to 500 µm.

Just as with the working electrode 21, the electrode catalyst layer constituting the counter electrode 22 is formed by firing fine particles of a metal insoluble in the electrolytic solution L, fine particles of an oxide of the metal, fine particles of an alloy of the metal, a mixture of these fine particles, or the like together with a binder.

The reference electrode 23 is constituted of an electrode catalyst member containing an electrode catalyst. The electrode catalyst member may be in the form of a sheet, or as shown in FIG. 1, an electrode catalyst layer formed on a surface of the gas-permeable porous membrane 17.

The electrode catalyst member constituting the reference electrode 23 is formed by firing fine particles of a metal insoluble in the electrolytic solution L, fine particles of an oxide of the metal, fine particles of an alloy of the metal, a mixture of these fine particles, or the like together with a binder.

The working electrode lead member 31a, the counter electrode lead member 31b, and the reference electrode lead member 31c are each drawn out of the casing 11 at one end, while maintaining a liquid tight state of the electrolytic solution reservoir, and electrically connected to the working electrode connector, the counter electrode connector, and the reference electrode connector of the controller 30, respectively. The other end of the working electrode lead member 31a is electrically connected to the working electrode 21 in a state of being caught between the working electrode 21 and the one end-side gas-permeable hydrophobic membrane 15. The other end of the counter electrode lead member 31b is electrically connected to the counter electrode 22 in a state of being caught between the counter electrode 22 and the other end-side gas-permeable hydrophobic membrane 16. The other end of the reference electrode lead member 31c is electrically connected to the reference electrode 23 in a state of being caught between the reference electrode 23 and the gas-permeable porous membrane 17. In such a manner, the other end of each of the working electrode lead member 31a, the counter electrode lead member 31b, and the reference electrode lead member 31c is immersed in the electrolytic solution L so as to be in contact with the electrolytic solution L in whole.

The working electrode lead member 31a, the counter electrode lead member 31b, and the reference electrode lead member 31c are each made of a metal insoluble in the electrolytic solution L.

Any of the three lead members, that is, the working electrode lead member 31a, the counter electrode lead member 31b, and the reference electrode lead member 31c is made of a metal (hereinafter called "specific metal") selected from gold (Au), tungsten (W), niobium (Nb), and tantalum (Ta). It is preferable that at least one of the working electrode lead member 31a and the reference electrode lead member 31c is made of the specific metal. It is more preferable that all of the working electrode lead member 31a, the counter electrode lead member 31b, and the reference electrode lead member 31c are made of the specific metal/metals.

In a case where each of the working electrode lead member 31a, the counter electrode lead member 31b, and the reference electrode lead member 31c is made of the specific metal, the lead members may be made of one kind of metal selected from gold, tungsten, niobium, and tantalum, or two or more kinds of metals.

The working electrode lead member 31a made of the specific metal is inert or inactive to various gases such as the miscellaneous gases contained in the object gas, a produced gas generated by an oxidation-reduction reaction of the counter electrode 22, and/or a produced gas generated by an oxidation-reduction reaction of the lead member (more specifically, the counter electrode lead member 31b) in the casing 11. When the miscellaneous gases contained in the object gas come into contact with a casing inside portion of the working electrode lead member 31a situated inside the casing 11, the occurrence of a reaction is thereby prevented or reduced at the casing inside portion. Also, when the produced gas generated by the oxidation-reduction reaction of the counter electrode 22 or the produced gas generated by the oxidation-reduction reaction of the counter electrode lead member 31b come into contact with the casing inside portion of the working electrode lead member 31a, the occurrence of a reaction is thereby prevented or reduced at the casing inside portion. That is, making the working electrode lead member 31a of the specific metal prevents or reduces the occurrence of an index error in the first potentiostatic electrolytic gas sensor owing to the effect of the miscellaneous gases or the produced gas on the working electrode lead member 31a.

When the counter electrode lead member 31b is made of the specific metal, even if the gas to be detected generates the produced gas such as an oxygen gas or a hydrogen gas by the oxidation-reduction reaction with the counter electrode 22, an oxidation-reduction reaction similar to that with the counter electrode 22 hardly occurs at the counter electrode lead member 31b, thus hardly generating a produced gas by an oxidation-reduction reaction, under voltage conditions in which the oxidation-reduction reaction occurs with the counter electrode 22. Therefore, it is possible to prevent the occurrence of an index error caused by the oxidation-reduction reaction at the counter electrode lead member 31b.

The reference electrode lead member 31c made of the specific metal is inert or inactive to various gases such as the miscellaneous gases contained in the object gas. When the miscellaneous gases contained in the object gas come into contact with a casing inside portion of the reference electrode lead member 31c situated inside the casing 11, the occurrence of a state change in an interface between the reference electrode lead member 31c and the electrolytic solution L is thereby prevented or reduced at the casing inside portion. As a result, this prevents or reduces a variation in the electrode potential of the reference electrode 23, which is caused by the state change in the interface between the reference electrode lead member 31c and the electrolytic solution L, and therefore a voltage (overvoltage) required to be applied to the working electrode 21 to produce an oxidation-reduction reaction of the working electrode 21 becomes substantially constant, irrespective of the composition of the object gas. Thus, it is possible to prevent the occurrence of an index error in the first potentiostatic electrolytic gas sensor.

As the specific metal for constituting the working electrode lead member 31a, tungsten, niobium, or tantalum is preferable.

As the specific metal for constituting the counter electrode lead member 31b, gold, tungsten, niobium, or tantalum is preferable.

As the specific metal for constituting the reference electrode lead member 31c, tungsten, niobium, or tantalum is preferable.

Provided that at least one of the three lead members, that is, the working electrode lead member 31a, the counter electrode lead member 31b, and the reference electrode lead member 31c is made of the specific metal, the other lead members may each be made of another metal such as platinum.

The first potentiostatic electrolytic gas sensor having such a structure is put into a gas detection mode, when a predetermined voltage is applied to the working electrode 21 and a certain potential difference occurs between the working electrode 21 and the reference electrode 23, with respect to the potential of the reference electrode 23. In the gas detection mode, the object gas such as air in the environmental atmosphere in the space to be detected is introduced through the gas inlet through hole 12 and supplied to the working electrode 21 through the one end-side gas-permeable hydrophobic membrane 15, so that the gas to be detected contained in the object gas is reduced or oxidized at the working electrode 21. With the reduction reaction or the oxidation reaction at the working electrode 21, an electrolytic current flows between the working electrode 21 and the counter electrode 22, so that an oxidation reaction or a reduction reaction occurs at the counter electrode 22. The value of the electrolytic current that flows between the working electrode 21 and the counter electrode 22 owing to the occurrence of the oxidation-reduction reaction at each of the working electrode 21 and the counter electrode 22 is measured, and the concentration of the gas to be detected contained in the object gas is thus detected on the basis of the measured electrolytic current value.

In the first potentiostatic electrolytic gas sensor, the specific metal for constituting the lead member is insoluble in the electrolytic solution L, and as is apparent from experimental examples described later, when used for making the lead member, the specific metal is inert or inactive to the miscellaneous gases contained in the object gas and the produced gas generated at the counter electrode 22 and the like in the casing 11. Thus, since the working electrode lead member 31a and/or the reference electrode lead member 31c are/is made of the specific metals/metal, even if the working electrode lead member 31a and/or the reference electrode lead member 31c come/comes into contact with the miscellaneous gases contained in the object gas and the produced gas generated at the counter electrode 22 and the like in the casing 11, it is possible to prevent or reduce the occurrence of an index error caused by the effect of the miscellaneous gases and/or the produced gas on the working electrode lead member 31a and/or the reference electrode lead member 31c, thus allowing accurate gas sensitivity, that is, high index accuracy. Also, when the counter electrode lead member 31b is made of the specific metal, even if the gas to be detected generates the produced gas (for example, an oxygen gas or a hydrogen gas, in the concrete) by the oxidation-reduction reaction with the counter electrode 22, for example, the counter electrode lead member 31b hardly generates a produced gas by an oxidation-reduction reaction, thus preventing the occurrence of an index error caused by the oxidation-reduction reaction with the counter electrode lead member 31b.

Accordingly, the first potentiostatic electrolytic gas sensor allows gas detection with high reliability irrespective of the composition of the object gas.

In the first potentiostatic electrolytic gas sensor, at least one of the working electrode lead member 31a, the counter electrode lead member 31b, and the reference electrode lead member 31c is required to be made of the specific metal, but at least the working electrode lead member 31a may preferably be made of the specific metal. When the working electrode lead member 31a is made of the specific metal, even if the miscellaneous gases are contained in the object gas or the produced gas is generated at the counter electrode 22, the counter electrode lead member 31b, or the like, it is possible to prevent or reduce the occurrence of an index error caused by the effect of the miscellaneous gases and the produced gas on the working electrode lead member 31a. Therefore, it is possible to obtain the larger effect of preventing the occurrence of an index error, as compared with that in a case where the counter electrode lead member 31b or the reference electrode lead member 31c is made of the specific metal.

Also, in the first potentiostatic electrolytic gas sensor, since one or both of the working electrode lead member 31a and the reference electrode lead member 31c are made of the specific metals, the lead members made of the specific metals can be disposed such that the casing inside portions thereof come into contact with the miscellaneous gases contained in the object gas and the produced gas generated at the counter electrode 22 and the like, thus facilitating increasing flexibility in design. More specifically, it becomes possible to shorten the clearance distance between the working electrode lead member 31a and the counter electrode 22, and/or between the reference electrode lead member 31c and the counter electrode 22, and the clearance distances among the lead members.

Also, if the counter electrode lead member 31b is made of the specific metal, the produced gas hardly occurs at the counter electrode lead member 31b by the oxidation-reduction reaction, and therefore it is possible to shorten the clearance distance between the counter electrode lead member 31b and the working electrode 21. Therefore, the first potentiostatic electrolytic gas sensor can have more flexibility in design, thus being reduced in size.

In the first potentiostatic electrolytic gas sensor, a gas that triggers a reduction reaction with the working electrode 21 and an oxidation reaction with the counter electrode 22, or a gas that triggers an oxidation reaction with the working electrode 21 and a reduction reaction with the counter electrode 22 can be used as the gas to be detected.

To be more specific, as examples of the gas that triggers the reduction reaction with the working electrode 21 and the oxidation reaction with the counter electrode 22, may be mentioned an oxygen gas, a nitrogen dioxide gas, a nitrogen trifluoride gas, a chlorine gas, a fluorine gas, an iodine gas, a chlorine trifluoride gas, an ozone gas, a hydrogen peroxide gas, a hydrogen fluoride gas, a hydrogen chloride gas (a hydrochloric acid gas), an acetic acid gas, and a nitric acid gas. When any of these gases is used as the gas to be detected, an oxygen gas is generated by the oxidation reaction with the counter electrode 22.

As examples of the gas that triggers the oxidation reaction with the working electrode 21 and the reduction reaction with the counter electrode 22, may be mentioned a carbon monoxide gas, a hydrogen gas, a sulfur dioxide gas, a silane gas, a disilane gas, a phosphine gas, and a germane gas.

The first potentiostatic electrolytic gas sensor according to the present invention is described above using the concrete example, but not limited to this. As long as the first potentiostatic electrolytic gas sensor is provided with the lead member made of the specific metal, the other constituent components are variously changeable.

The first potentiostatic electrolytic gas sensor is not limited to a structure having the three electrodes, that is, the working electrode, the counter electrode, and the reference electrode as shown in FIG. 1, but may have only the working electrode and the counter electrode as the electrodes without having the reference electrode and have the working electrode lead member and the counter electrode lead member as the lead members. In the first potentiostatic electrolytic gas sensor having this structure, any one of the working electrode lead member and the counter electrode lead member is required to be made of the specific metal, but at least the working electrode lead member may preferably be made of the specific metal.

When the working electrode lead member is made of the specific metal, even if the object gas contains the miscellaneous gases or the produced gas is generated at the counter electrode, the counter electrode lead member, or the like, it is possible to prevent or reduce the occurrence of an index error caused by the effect of the miscellaneous gases or the produced gas on the working electrode lead member. Therefore, it is possible to obtain the larger effect of preventing the occurrence of an index error, as compared with that in a case where the counter electrode lead member is made of the specific metal.

### <Second Potentiostatic Electrolytic Gas Sensor>

A second potentiostatic electrolytic gas sensor according to the present invention is characterized in that the reference electrode is made of a specific material other than platinum.

By way of example, the second potentiostatic electrolytic gas sensor according to the present invention has the same structure as the first potentiostatic electrolytic gas sensor shown in FIG. 1, except that at least one of the working electrode lead member, the counter electrode lead member, and the reference electrode lead member is not made of the specific metal, but the reference electrode is made of the specific material.

The second potentiostatic electrolytic gas sensor will be described below with reference to FIG. 1.

In the second potentiostatic electrolytic gas sensor, a casing 11, a one end-side gas-permeable hydrophobic membrane 15, the other end-side gas-permeable hydrophobic membrane 16, a gas-permeable porous membrane 17, a working electrode 21, a counter electrode 22, and a controller 30 each have the same structure as the corresponding constituent component of the first potentiostatic electrolytic gas sensor shown in FIG. 1.

In the second potentiostatic electrolytic gas sensor, a reference electrode 23 is made of a material (hereinafter also called "specific material") selected from iridium (Ir), an iridium oxide (IrO₂), ruthenium (Ru), a ruthenium oxide (RuO₂), and a platinum oxide. In other words, the specific material is used as an electrode material for the reference electrode 23. As the platinum oxide for constituting the reference electrode 23, there are a platinum oxide (IV) (PtO₂) and a platinum oxide (II) (PtO).

The reference electrode 23 may be made of one kind of material selected out of iridium (Ir), an iridium oxide (IrO₂), ruthenium (Ru), a ruthenium oxide (RuO₂), a platinum oxide (IV) (PtO₂), and a platinum oxide (II) (PtO), or two or more kinds of materials thereof combined together.

The reference electrode 23 may contain, together with the specific material, a conductive non-metal (hereinafter also called "reference electrode conductive non-metal") other than the specific material, a binder used in a manufacturing process described later (a manufacturing process of an electrode catalyst member for constituting the reference electrode 23), and the like, which are insoluble in an electrolytic solution L, as electrode materials.

As concrete examples of the reference electrode conductive non-metal, may be mentioned carbon black such as channel black, acetylene black, and Ketjen Black.

The particle diameter of the carbon black used as the reference electrode conductive non-metal may preferably be not more than 100 µm.

As examples of the reference electrode conductive non-metal, may be mentioned graphite (black lead), active carbon, carbon fiber, carbon nanotube, fullerene in addition to the carbon black.

When the reference electrode 23 contains the reference electrode conductive non-metal, the reference electrode conductive non-metal may preferably be contained at a ratio of not more than 30 parts by mass per 100 parts by mass of the specific material.

The reference electrode 23 is constituted of an electrode catalyst member containing an electrode catalyst made of the specific material, in the concrete. The electrode catalyst member may be in the form of a sheet, or as shown in FIG. 1, an electrode catalyst layer formed on a surface of the gas-permeable porous membrane 17.

The electrode catalyst member for constituting the reference electrode 23 is formed by firing fine particles of the specific material or a mixture of the fine particles of the specific material and fine particles of the reference electrode conductive non-metal, together with a binder.

The fine particles of the specific material used in the manufacturing process of the electrode catalyst member for constituting the reference electrode 23 may preferably have a particle diameter of not more than 75 µm (200 mesh) and a specific surface of 2 to 200 m²/g.

In the manufacturing process of the electrode catalyst member for constituting the reference electrode 23, a binder insoluble in the electrolytic solution L is used such as, for example, polytetrafluoroethylene (PTFE), a tetrafluoroethylene-hexafluoropropylene copolymer (FEP), and a tetrafluoroethylene-perfluoro [2-(fluorosulfonylethoxy)-prolylvinylether] copolymer.

As to firing conditions, a firing temperature may preferably be 80 to 350°C, and a firing time may preferably be 5 minutes to 1 hour.

Although the form and thickness of the electrode catalyst member constituting the reference electrode 23 are not especially limited, the electrode catalyst member may preferably have a large interface area with the electrolytic solution L, in order to maintain potential stability against a minute electric current flowing from a control circuit (more specifically, a potentiostat circuit, for example) of the controller 30.

When the electrode catalyst member constituting the reference electrode 23 constitutes the electrode catalyst layer formed on the surface of the gas-permeable porous membrane 17, the thickness of the electrode catalyst layer formed is, for example, 10 to 500 µm. The formation area of the electrode catalyst layer in the surface of the gas-permeable porous membrane 17 is, for example, 3 to 500 mm².

In the second potentiostatic electrolytic gas sensor, each of a working electrode lead member 31a, a counter electrode lead member 31b, and a reference electrode lead member 31c is made of a metal insoluble in the electrolytic solution L.

The reference electrode lead member 31c may preferably be made of a specific metal.

In a case where the reference electrode lead member 31c is made of the specific metal, the reference electrode lead member 31c may be made of one kind of metal out of tantalum, gold, tungsten, and niobium, or may be made of two or more kinds of metals thereof.

Note that, in the second potentiostatic electrolytic gas sensor, when the reference electrode lead member 31c is made of the specific metal, the second potentiostatic electrolytic gas sensor corresponds with the first potentiostatic electrolytic gas sensor.

Since the reference electrode lead member 31c is made of the specific metal, gas detection is performed with higher reliability.

To be more specific, as is apparent from the experimental examples described later, the reference electrode lead member 31c made of the specific metal is inert or inactive to various gases contained in the object gas as the miscellaneous gases. Thus, when the miscellaneous gases contained in the object gas come in contact with a casing inside portion of the reference electrode lead member 31c situated inside the casing 11, the occurrence of a state change in an interface between the reference electrode lead member 31c and the electrolytic solution L is thereby prevented or reduced at the casing inside portion. Accordingly, in the second potentiostatic electrolytic gas sensor, it is possible to prevent or reduce a variation in the electrode potential of the reference electrode 23, which is caused by the state change in the interface between the reference electrode lead member 31c and the electrolytic solution L, and therefore a voltage required to be applied to the working electrode 21 becomes substantially constant, irrespective of the composition of the object gas. As a result, it is possible to further reduce the occurrence of an index error in the second potentiostatic electrolytic gas sensor, thus allowing high reliability of gas detection.

The second potentiostatic electrolytic gas sensor having such a structure detects the gas to be detected from the object gas in a like manner as the first potentiostatic electrolytic gas sensor.

In other words, the second potentiostatic electrolytic gas sensor is put into a gas detection mode, when a predetermined voltage is applied to the working electrode 21 and a certain potential difference occurs between the working electrode 21 and the reference electrode 23, with respect to the potential of the reference electrode 23. In the gas detection mode, the object gas such as air in an environmental atmosphere in space to be detected is introduced through the gas inlet through hole 12, and supplied to the working electrode 21 through the one end-side gas-permeable hydrophobic membrane 15, so that the gas to be detected contained in the object gas is reduced or oxidized at the working electrode 21. With the reduction reaction or the oxidation reaction at the working electrode 21, an electrolytic current flows between the working electrode 21 and the counter electrode 22, so that an oxidation reaction or a reduction reaction occurs at the counter electrode 22. The value of the electrolytic current that flows between the working electrode 21 and the counter electrode 22 owing to the occurrence of the oxidation-reduction reaction at each of the working electrode 21 and the counter electrode 22 is measured, and the concentration of the gas to be detected contained in the object gas is detected on the basis of the measured electrolytic current value.

In the second potentiostatic electrolytic gas sensor, the specific metal used as an electrode material of the reference electrode 23 is insoluble in the electrolytic solution L and exhibits conductivity when being used as the electrode material, and as is apparent from experimental examples described later, has superior potential stability so as to keep the electrode potential of the reference electrode 23 at substantially constant even when coming into contact with the miscellaneous gases contained in the object gas. Although not described in the experimental examples described later, the reference electrode 23 using a platinum oxide (IV) (PtO₂) as the specific material provides superior potential stability, just as with that using a platinum oxide (II) (PtO) as the specific material. Therefore, a voltage required to be applied to the working electrode 21 to cause the oxidation-reduction reaction of the working electrode 21 becomes substantially constant, irrespective of the composition of the object gas, thus allowing accurate gas sensitivity, that is, high index accuracy.

Accordingly, the second potentiostatic electrolytic gas sensor allows gas detection with high reliability irrespective of the composition of the object gas.

In the second potentiostatic electrolytic gas sensor, since the reference electrode lead member 31c is made of the specific metal, the occurrence of an index error is further reduced in the second potentiostatic electrolytic gas sensor, thus allowing gas detection with higher reliability.

In the second potentiostatic electrolytic gas sensor, just as with the first potentiostatic electrolytic gas sensor, a gas that triggers a reduction reaction with the working electrode 21 and an oxidation reaction with the counter electrode 22, or a gas that triggers an oxidation reaction with the working electrode 21 and a reduction reaction with the counter electrode 22 can be used as the gas to be detected.

To be more specific, as examples of the gas that triggers the reduction reaction with the working electrode 21 and the oxidation reaction with the counter electrode 22, may be mentioned an oxygen gas, a nitrogen dioxide gas, a nitrogen trifluoride gas, a chlorine gas, a fluorine gas, an iodine gas, a chlorine trifluoride gas, an ozone gas, a hydrogen peroxide gas, a hydrogen fluoride gas, a hydrogen chloride gas (a hydrochloric acid gas), an acetic acid gas, and a nitric acid gas. When any of these gases is used as the gas to be detected, an oxygen gas is generated by the oxidation reaction with the counter electrode 22.

As examples of the gas that triggers the oxidation reaction with the working electrode 21 and the reduction reaction with the counter electrode 22, may be mentioned a carbon monoxide gas, a hydrogen gas, a sulfur dioxide gas, a silane gas, a disilane gas, a phosphine gas, and a germane gas.

In the second potentiostatic electrolytic gas sensor, when a gas that triggers an oxidation reaction with the counter electrode 22 and generates an oxygen gas at the counter electrode 22 is used as the gas to be detected, the counter electrode 22 may preferably be made of an iridium oxide.

By making the counter electrode 22 of the iridium oxide, an overvoltage of the counter electrode 22 at the occurrence of the oxygen is lowered and kept at substantially constant for a long period of time. Thus, gas detection is desirably performed for a long period of time in a stable manner. Moreover, the formation area of the electrode catalyst layer constituting the counter electrode 22 in the surface of the other end-side gas-permeable hydrophobic membrane 16 can be reduced in size, so that the second potentiostatic electrolytic gas sensor is reduced in size.

In the second potentiostatic electrolytic gas sensor, when a gas that triggers a reduction reaction with the counter electrode 22 is used as the gas to be detected, the counter electrode 22 may preferably be made of platinum black (black platinum fine particles).

Making the counter electrode 22 of the platinum black allows a reduction in the occurrence of hydrogen, because the platinum black is highly active to an oxidation reaction occurring at the counter electrode 22.

The second potentiostatic electrolytic gas sensor according to the present invention is described above with reference to the concrete example, but not limited to this. As long as the second potentiostatic electrolytic gas sensor is provided with the reference electrode made of the specific material, the other constituent components are variously changeable.

For example, the second potentiostatic electrolytic gas sensor may have the reference electrode that is situated alongside the counter electrode a distance away from the counter electrode in the inner surface of the other end-side gas-permeable hydrophobic membrane on the side being in contact with the solution in the second potentiostatic electrolytic gas sensor shown in FIG. 1.

In the second potentiostatic electrolytic gas sensor having such a structure, the reference electrode is disposed so as to be in direct contact with the object gas. However, since the reference electrode is made of the specific material and has superior potential stability, even if the miscellaneous gases contained in the object gas directly come into contact with the reference electrode, a voltage required to be applied to the working electrode becomes substantially constant irrespective of the composition of the object gas. Thus, it is possible to obtain accurate gas sensitivity, that is, high index accuracy.

Also, forming the counter electrode and the reference electrode in the other end-side gas-permeable hydrophobic membrane eliminates the need for providing separate porous membranes to form the counter electrode and the reference electrode, and thereby the number of constituent components is reduced, thus reducing manufacturing costs and easing the manufacture of the sensor. Also, eliminating the need for keeping space for disposing the reference electrode between the one end-side gas-permeable hydrophobic membrane and the other end-side gas-permeable hydrophobic membrane in the casing allows a further reduction in size. Especially when an iridium oxide is used as electrode materials for the counter electrode and the reference electrode, there is no need for providing individual electrode catalysts to form the counter electrode and the reference electrode, and the counter electrode and the reference electrode can be formed at the same time, thus further reducing the manufacturing costs and easing the manufacture of the sensor. In addition, since the electrode size of the counter electrode can be reduced, the second potentiostatic electrolytic gas sensor can be further reduced in size.

<Third Potentiostatic Electrolytic Gas Sensor> A third potentiostatic electrolytic gas sensor according to the present invention is a potentiostatic electrolytic oxygen gas sensor in which an oxygen gas is used as the gas to be detected, and is characterized in that a working electrode is made of metal black selected from platinum black and gold black, and a working electrode lead member is made of a specific metal.

The third potentiostatic electrolytic gas sensor is encompassed by the first potentiostatic electrolytic gas sensor.

By way of example, the third potentiostatic electrolytic gas sensor according to the present invention has the same structure as the first potentiostatic electrolytic gas sensor shown in FIG. 1 according to the present invention, except for having a gas supply controller, a working electrode made of specific metal black, and a working electrode lead member made of a specific metal.

The third potentiostatic electrolytic gas sensor will be described below with reference to FIG. 1.

In the third potentiostatic electrolytic gas sensor, a one end-side gas-permeable hydrophobic membrane 15, the other end-side gas-permeable hydrophobic membrane 16, a gas-permeable porous membrane 17, a counter electrode 22, a reference electrode 23, a counter electrode lead member 31b, a reference electrode lead member 31c, and a controller 30 each have the same structure as the corresponding constituent component of the first potentiostatic electrolytic gas sensor shown in FIG. 1.

In the third potentiostatic electrolytic gas sensor, the gas supply controller includes a gas inlet through hole 12. The gas inlet through hole 12 has an extremely small inside diameter so as to introduce the object gas therethrough, while limiting a supply to the working electrode 21. When the gas inlet through hole 12 has a uniform inside diameter, the gas inlet through hole 12 has an inside diameter of 1.0 to 200 µm in practical use, and a length of not less than 0.1 mm, for example.

A casing 11 formed with the gas inlet through hole 12 is made of a resin such as polycarbonate, vinyl chloride, polyethylene, polypropylene, or polytetrafluoroethylene (PTFE), just as with that of the first potentiostatic electrolytic gas sensor according to FIG. 1.

In the third potentiostatic electrolytic gas sensor, the working electrode 21 is made of metal black (hereinafter also called "specific metal black") selected from platinum black (platinum fine particles) and gold black (gold fine particles). In other words, the specific metal black is used as an electrode material for the working electrode 21. The working electrode 21 may be made of the platinum black, the gold black, or a combination of the platinum black and the gold black.

To be more specific, the working electrode 21 is constituted of an electrode catalyst layer that is formed by firing the specific metal black together with a binder, on one surface of the one end-side gas-permeable hydrophobic membrane 15. The electrode catalyst layer has a thickness of, for example, 5 to 300 µm.

The working electrode 21 made of platinum black has an extremely high activity to the gas to be detected. Therefore, in the third potentiostatic electrolytic gas sensor, a voltage required to be applied to the working electrode 21 is lowered.

The working electrode 21 made of gold black has a low activity to gases contained as the miscellaneous gases and the like in the object gas. Thus, in the third potentiostatic electrolytic gas sensor, it is possible to reduce the occurrence of an index error owing to the effect of the miscellaneous gases on the working electrode 21.

Also, the counter electrode 22 is made of a metal insoluble in an electrolytic solution L and/or an oxide of the metal, but may preferably be made of an iridium oxide. In other words, the iridium oxide may preferably be used as an electrode material for the counter electrode 22. As examples of the iridium oxide for making the counter electrode 22, may be mentioned an iridium oxide (IV) (IrO₂) and an iridium oxide (III) (Ir₂O₃).

By making the counter electrode 22 of an iridium oxide, a voltage required to be applied to the counter electrode 22 becomes lowered and substantially constant for a long period of time.

This is because the iridium oxide is insoluble to the electrolytic solution L, and, as is apparent from the experimental examples described later, has as high a conductivity as platinum when used as an electrode material for the counter electrode 22, and furthermore enables to keep the conductivity of the counter electrode 22 at constant for a long period of time.

The counter electrode (hereinafter also called "iridium oxide counter electrode") 22 made of an iridium oxide may contain, together with the iridium oxide, a conductive non-metal (hereinafter also called "counter electrode conductive non-metal") other than an iridium oxide, a binder used in a manufacturing process, and the like, which are insoluble in the electrolytic solution L.

As a concrete example of the counter electrode conductive non-metal, may be mentioned carbon black such as channel black, acetylene black, and Ketjen Black.

The particle diameter of the carbon black used as the counter electrode conductive non-metal may preferably be not more than 100 µm.

As examples of the counter electrode conductive non-metal, may be mentioned graphite (black lead), active carbon, carbon fiber, carbon nanotube, and fullerene in addition to the carbon black.

When the iridium oxide counter electrode 22 contains the counter electrode conductive non-metal, the counter electrode conductive non-metal may preferably be contained at a ratio of not more than 30 parts by mass per 100 parts by mass of the iridium oxide.

The iridium oxide counter electrode 22 is constituted of an electrode catalyst layer formed on one surface of the other end-side gas-permeable hydrophobic membrane 16, in the concrete. The electrode catalyst layer is formed by firing fine particles of an iridium oxide or a mixture of the fine particles of the iridium oxide and fine particles of the counter electrode conductive non-metal, together with a binder.

The fine particles of the iridium oxide used in the manufacturing process of the electrode catalyst layer constituting the iridium oxide counter electrode 22 may preferably have a particle diameter of not more than 75 µm (200 mesh) and a specific surface of 2 to 200 m²/g.

In the manufacturing process of the electrode catalyst layer constituting the iridium oxide counter electrode 22, a binder insoluble in the electrolytic solution L is used such as, for example, polytetrafluoroethylene (PTFE), a tetrafluoroethylene-hexafluoropropylene copolymer (FEP), and a tetrafluoroethylene-perfluoro [2-(fluorosulfonylethoxy)-prolylvinylether] copolymer.

As to firing conditions, a firing temperature may preferably be 80 to 350°C, and a firing time may preferably be 5 minutes to 1 hour.

The thickness of the electrode catalyst layer constituting the iridium oxide counter electrode 22 may preferably be 10 to 500 µm, and more preferably 50 to 300 µm.

Also, the electrode catalyst layer constituting the iridium oxide counter electrode 22 facilitates reducing the formation area of the electrode catalyst layer in the surface of the other end-side gas-permeable hydrophobic membrane 16.

To be more specific, an iridium oxide has a high conductivity and keeps the conductivity at constant for a long period of time, when used as an electrode material. Thus, without having a detriment that a voltage to be applied to the working electrode 21 becomes too high, it is possible to reduce the formation area of the iridium oxide counter electrode 22 in the surface of the other end-side gas-permeable hydrophobic membrane 16. For example, when the formation surface of the iridium oxide counter electrode 22 is in a circular shape, the diameter thereof is 2 to 15 mm.

The reference electrode 23 is made of a metal and/or an oxide of the metal insoluble in the electrolytic solution L, but may preferably be made of a specific material. In other words, the specific material may preferably be used as an electrode material for the reference electrode 23.

The reference electrode 23 made of the specific material is made of one kind of material out of iridium (Ir), an iridium oxide (IrO₂), ruthenium (Ru), a ruthenium oxide (RuO₂), a platinum oxide (IV) (PtO₂), and a platinum oxide (II) (PtO), or a combination of two or more kinds of materials thereof.

Note that, when the reference electrode 23 is made of the specific material, the third potentiostatic electrolytic gas sensor is encompassed by the second potentiostatic electrolytic gas sensor too.

Since the reference electrode 23 is made of the specific material, an electrode potential is kept at substantially constant even if the reference electrode 23 comes into contact with the miscellaneous gases contained in the object gas. Thus, in the third potentiostatic electrolytic gas sensor, a voltage required to be applied to the working electrode 21 becomes substantially constant, irrespective of the composition of the object gas.

The reference electrode 23 made of the specific material has the same structure as the reference electrode 23 of the second potentiostatic electrolytic gas sensor according to FIG. 1.

A working electrode lead member 31a is made of a specific metal.

The working electrode lead member 31a may be made of one kind of metal out of gold, tungsten, niobium, and tantalum, or may be made of two or more kinds of metals thereof.

The working electrode lead member 31a made of the specific metal is inert or inactive to various gases such as the miscellaneous gases contained in the object gas and a produced gas generated by an oxidation reaction of the counter electrode 22 and/or the lead member (more specifically, the counter electrode lead member 31b) in the casing 11. Thus, when the produced gas generated by the oxidation reaction of the counter electrode 22 or the produced gas generated by the oxidation reaction of the counter electrode lead member 31b comes in contact with a casing inside portion of the working electrode lead member 31a, the occurrence of a reaction (oxidation reaction) is prevented or reduced at the casing inside portion. Also, when the miscellaneous gases contained in the object gas come into contact with the casing inside portion of the working electrode lead member 31a, the occurrence of a reaction is prevented or reduced at the casing inside portion. That is, making the working electrode lead member 31a of the specific metal prevents or reduces the occurrence of an index error in the third potentiostatic electrolytic gas sensor, owing to the effect of the miscellaneous gases and the produced gas on the working electrode lead member 31a.

As the specific metal for constituting the working electrode lead member 31a, tungsten, niobium, or tantalum is preferable.

The reference electrode lead member 31c is made of a metal insoluble in the electrolytic solution L, but may preferably be made of a specific metal.

When the reference electrode lead member 31c is made of the specific metal, the reference electrode lead member 31c may be made of one kind of metal out of gold, tungsten, niobium, and tantalum, or may be made of two or more kinds of metals thereof.

The reference electrode lead member 31c made of the specific metal is inert or inactive to various gases such as the miscellaneous gases contained in the object gas. Thus, when the miscellaneous gases contained in the object gas come into contact with a casing inside portion of the reference electrode lead member 31c situated inside the casing 11, the occurrence of a state change in an interface between the reference electrode lead member 31c and the electrolytic solution L is thereby prevented or reduced at the casing inside portion. As a result, in the third potentiostatic electrolytic gas sensor, it is possible to prevent or reduce a variation in the electrode potential of the reference electrode 23, which is caused by the state change in the interface between the reference electrode lead member 31c and the electrolytic solution L, and therefore a voltage required to be applied to the working electrode 21 becomes substantially constant, irrespective of the composition of the object gas. Thus, it is possible to prevent the occurrence of an index error in the third potentiostatic electrolytic gas sensor.

As the specific metal for constituting the reference electrode lead member 31c, tungsten, niobium, or tantalum is preferable.

The third potentiostatic electrolytic gas sensor having such a structure is put into a gas detection mode, when a predetermined voltage is applied to the working electrode 21 and a certain potential difference occurs between the working electrode 21 and the reference electrode 23, with respect to the potential of the reference electrode 23. In the gas detection mode, the object gas such as air in an environmental atmosphere in space to be detected is introduced through the gas inlet through hole 12, and supplied to the working electrode 21 through the one end-side gas-permeable hydrophobic membrane 15, so that the gas (oxygen gas) to be detected contained in the object gas is reduced at the working electrode 21. With the reduction reaction at the working electrode 21, an electrolytic current flows between the working electrode 21 and the counter electrode 22, so that the electrolysis of water occurs at the counter electrode 22 as an oxidation reaction. The value of the electrolytic current that flows between the working electrode 21 and the counter electrode 22, owing to the occurrence of the oxidation-reduction reaction at each of the working electrode 21 and the counter electrode 22, is measured, so that the concentration of the gas to be detected contained in the object gas is detected on the basis of the measured electrolytic current value.

In the third potentiostatic electrolytic gas sensor, the produced gas generated at the counter electrode 22 by the oxidation reaction passes through the other end-side gas-permeable hydrophobic membrane 16, and flows through the gas outlet through hole 13 to be drained outside.

In the third potentiostatic electrolytic gas sensor, the working electrode lead member 31a made of the specific metal is inert or inactive to the produced gas generated by the oxidation reaction of the counter electrode 22. Thus, if the produced gas generated at the counter electrode 22 is the same kind of gas as the gas to be detected, the occurrence of an index error by the effect of the produced gas on the working electrode lead member 31a is prevented or reduced.

Accordingly, the third potentiostatic electrolytic gas sensor allows desired gas detection with high reliability.

In the third potentiostatic electrolytic gas sensor, using the iridium oxide as an electrode material for the counter electrode 22 allows desired gas detection in a stable manner with a low voltage for a long period of time.

The third potentiostatic electrolytic gas sensor having the iridium oxide counter electrode 22 allows gas detection with a low voltage for a long period of time and therefore requires low electric power consumption, which enables the third potentiostatic electrolytic gas sensor to be suitably used as a gas sensor for a battery-powered portable detector, for example. When this third potentiostatic electrolytic gas sensor is used in the battery-powered portable detector, a battery is in need of changing less frequently than in the third potentiostatic electrolytic gas sensor having a counter electrode 22 made of platinum.

In the third potentiostatic electrolytic gas sensor, making the counter electrode 22 of the iridium oxide facilitates reducing the formation area of the electrode catalyst layer that constitutes the counter electrode 22 in the surface of the other end-side gas-permeable hydrophobic membrane 16, without having a detriment that the voltage to be applied to the counter electrode 22 becomes too high. Therefore, the third potentiostatic electrolytic gas sensor can be reduced in size.

In the third potentiostatic electrolytic gas sensor, using the specific material as an electrode material for the reference electrode 23 and/or using a lead member made of the specific metal as the reference electrode lead member 31c make/makes it possible to reduce the occurrence of an index error, irrespective of the composition of the object gas. This brings about accurate gas sensitivity, that is, high index accuracy, thus resulting in the further higher reliability of gas detection.

The third potentiostatic electrolytic gas sensor according to the present invention is not limited to having the structure described above, but may have a structure as shown in FIG. 2, for example.

FIG. 2 is an explanatory sectional view showing the structure of another example of the third potentiostatic electrolytic gas sensor according to the present invention.

This third potentiostatic electrolytic gas sensor (potentiostatic electrolytic oxygen gas sensor) 40 is provided with a casing 41 having the shape of an approximately box as a whole, which has an electrolytic solution reservoir S for containing an electrolytic solution therein.

The casing 41 is formed with sensing portion formation space 45, which is constituted of an approximately cylindrical through hole extending in a vertical direction, next to the electrolytic solution reservoir S so as to be coupled to inner space of the electrolytic solution reservoir S through a coupling hole 43. In the sensing portion formation space 45, there is disposed a top side protection plate 50 in which a fluid passage constituted of a plurality of through holes 50A penetrating in a thickness direction is formed. On the top surface of the top side protection plate 50, an electrolytic solution holding layer (not shown) made of, for example, filter paper, a working electrode 55 and a plate-shaped lid member 60 made of, for example, a liquid crystal polymer, which is formed with a pin hole (gas supply controller) 61 in a penetrating manner to introduce the object gas therethrough, are sequentially disposed. On the bottom surface of the top side protection plate 50, on the other hand, there is provided a reference electrode 57 in its middle with the interposition of an electrolytic solution holding layer (not shown) made of filter paper, for example.

Also, a bottom side protection plate 65 in which a fluid passage constituted of a plurality of through holes 65A penetrating in a thickness direction is formed under the top side protection plate 50 in the sensing portion formation space 45. On the bottom surface of the bottom side protection plate 65, an electrolytic solution holding layer (not shown) made of, for example, filter paper, a counter electrode 56 and a cap member 70, which is formed with a gas outlet through hole 70A for ejecting the object gas, are sequentially disposed.

In the third potentiostatic electrolytic gas sensor 40, the working electrode 55, the counter electrode 56, and the reference electrode 57 are connected to a controller (not shown) e.g. a potentiostat through a working electrode lead member (not shown), a counter electrode lead member (not shown), and a reference electrode lead member (not shown), respectively. The working electrode lead member, the counter electrode lead member, and the reference electrode lead member are each drawn out of the casing 41 at one end, while maintaining a liquid tight state of the electrolytic solution reservoir S in the casing 41. Also, the other end of each of the working electrode lead member, the counter electrode lead member, and the reference electrode lead member is electrically connected to the corresponding electrode while being caught between the electrode and the filter paper constituting the electrolytic solution holding layer.

In the example of the drawing, reference numeral 42 indicates a gas-permeable hydrophobic pressure control membrane made of, for example, a fluororesin.

In the third potentiostatic electrolytic gas sensor 40, the reference electrode 57 is constituted of an electrode catalyst layer containing an electrode catalyst made of a specific material, formed in the middle of a surface of a gas-permeable porous membrane (not shown) made of a fluorine resin, for example, polytetrafluoroethylene (PTFE). The electrode catalyst layer of the reference electrode 57 has the same structure as that of the reference electrode 23 in the third potentiostatic electrolytic gas sensor shown in FIG. 1.

The working electrode 55 is constituted of an electrode catalyst layer formed in the middle of a surface of a gas-permeable hydrophobic membrane (not shown). The electrode catalyst layer of the working electrode 55 has the same structure as that of the working electrode 21 in the third potentiostatic electrolytic gas sensor shown in FIG. 1. The counter electrode 56 is constituted of an electrode catalyst layer formed in the middle of a surface of a gas-permeable hydrophobic membrane (not shown). The electrode catalyst layer of the counter electrode 56 has the same structure as that of the counter electrode 22 in the third potentiostatic electrolytic gas sensor shown in FIG. 1. Also, the working electrode lead member, the counter electrode lead member, and the reference electrode lead member have the same structure as the working electrode lead member 31a, the counter electrode lead member 31b, and the reference electrode lead member 31c, respectively, in the third potentiostatic electrolytic gas sensor shown in FIG. 1.

According to the third potentiostatic electrolytic gas sensor 40 having such a structure, just as with the third potentiostatic electrolytic gas sensor shown in FIG. 1, the working electrode 55 is made of specific metal black and the working electrode lead member is made of a specific metal, so that desired gas detection is performed with higher reliability.

The third potentiostatic electrolytic gas sensor according to the present invention is described above using the concrete examples, but the third potentiostatic electrolytic gas sensor according to the present invention is not limited to these. As long as the working electrode is made of the specific metal black and the working electrode lead member is made of the specific metal, the other constituent components are variously changeable.

For example, when the reference electrode is made of a specific material, the third potentiostatic electrolytic gas sensor may have the reference electrode that is situated alongside the counter electrode a distance away from the counter electrode in the inner surface of the other end-side gas-permeable hydrophobic membrane on the side being in contact with the solution in the third potentiostatic electrolytic gas sensor shown in FIG. 1.

In the third potentiostatic electrolytic gas sensor having such a structure, the reference electrode is disposed in a position so as to directly contact the object gas. However, since the reference electrode is made of the specific material and has superior potential stability, even if the miscellaneous gases contained in the object gas come into direct contact with the reference electrode, a voltage required to be applied to the working electrode becomes substantially constant, irrespective of the composition of the object gas. Thus, it is possible to obtain accurate gas sensitivity, that is, high index accuracy. Also, making the reference electrode lead member of the specific metal allows obtainment of higher index accuracy.

Also, forming the counter electrode and the reference electrode in the other end-side gas-permeable hydrophobic membrane eliminates the need for providing individual porous membranes to form the counter electrode and the reference electrode thereon, and thereby the number of constituent components is reduced, thus reducing manufacturing costs and easing the manufacture of the sensor. Also, eliminating the need for keeping space for disposing the reference electrode between the one end-side gas-permeable hydrophobic membrane and the other end-side gas-permeable hydrophobic membrane in the casing allows a further reduction in size. Especially when an iridium oxide is used as an electrode material for the counter electrode and the reference electrode, there is no need for providing individual electrode catalysts to form the counter electrode and the reference electrode, and the counter electrode and the reference electrode can be formed at the same time, thus further reducing the manufacturing costs and easing the manufacture of the sensor. In addition, since the electrode size of the counter electrode can be reduced, the third potentiostatic electrolytic gas sensor can be further reduced in size.

Experimental examples of the present invention will be described below.

### [Experimental Example 1]

An experiment device (hereinafter also called "experiment device (1)") having a structure shown in FIG. 3 was manufactured.

The experiment device (1) was provided with a container 81 in the shape of a cylinder with a bottom, which was formed with a gas inlet through hole and a gas outlet through hole at a peripheral surface 82. A circular porous PTFE membrane (trade name: "FX-030" (made by Sumitomo Electric Fine Polymer, Inc.)) 84 was attached to the container 81 with a double-sided adhesive tape so as to close an opening. On the top surface (top surface in FIG. 3) of the porous PTFE membrane 84, five kinds of metal wires 91a to 91e were disposed such that one end of each of the metal wires 91a to 91e was situated above the opening of the container 81, and a piece of circular filter paper 85 that was impregnated with a sulfuric acid having a concentration of 18N was disposed. That is to say, the five kinds of metal wires 91a to 91e were caught between the porous PTFE membrane 84 and the filter paper 85 at their one ends. On the top surface (top surface in FIG. 3) of the filter paper 85, a mercury sulfate electrode 87 was provided. The five kinds of metal wires 91a to 91e were connected to an electrometer (not shown) to measure spontaneous potentials of the five kinds of metal wires 91a to 91e at the same time.

In the experiment device (1), a platinum wire, a gold wire, a tungsten wire, a tantalum wire, and a niobium wire were used as the five kinds of metal wires 91a to 91e. The five kinds of metal wires 91a to 91e each had a diameter of 0.1 mm and a length of the order of 5 mm.

Also, a gas passage member was connected to the gas inlet through hole of the container 81, so as to feed a gas (air or a sample gas described later in the concrete) from a gas supply source 93 into the container 81 using a pump 89 provided in a gas passage 88 formed in the gas passage member.

In the experiment device (1) manufactured, after air was supplied for 30 seconds, a sample gas was supplied for 60 seconds. After that, air was supplied again for additional 30 seconds. While the air, the sample gas, and the air were supplied in this manner, the spontaneous potentials were measured to confirm variations in the spontaneous potentials.

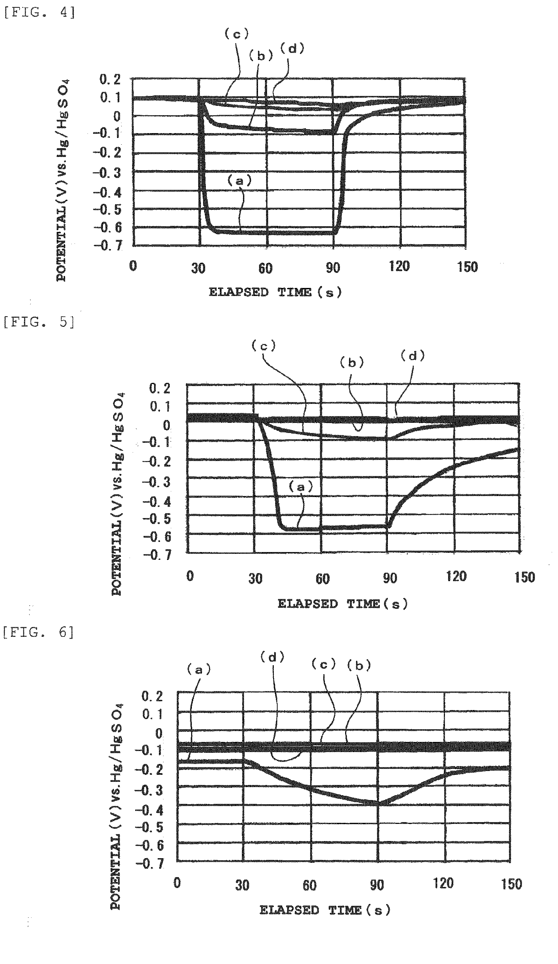

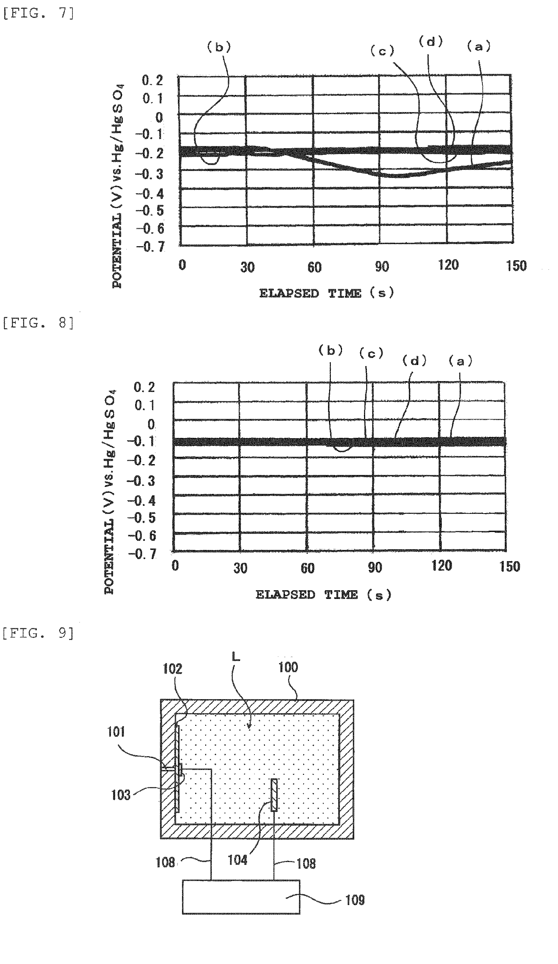

As the sample gas, a nitrogen gas (a concentration of 99.9%), a low concentration hydrogen gas (a concentration of 2.06% by being diluted with a nitrogen gas), a high concentration hydrogen gas (a concentration of 99.9%), a nitrogen monoxide gas (a concentration of 101 ppm by being diluted with a nitrogen gas), a hydrogen sulfide gas (a concentration of 29.7 ppm by being diluted with a nitrogen gas), a carbon monoxide gas (a concentration of 3010 ppm by being diluted with a nitrogen gas), and an ethanol gas (a concentration of 1% by being diluted with air) were used. Table 1 shows results, and FIGS. 4 to 8 show measurement results of the spontaneous potentials using the sample gases with which the spontaneous potential of the platinum wire varies relatively largely. FIG. 4 shows the measurement results of the spontaneous potential of the platinum wire. FIG. 5 shows the measurement results of the spontaneous potential of the gold wire. FIG. 6 shows the measurement results of the spontaneous potential of the tungsten wire. FIG. 7 shows the measurement results of the spontaneous potential of the tantalum wire. FIG. 8 shows the measurement results of the spontaneous potential of the niobium wire. In FIGS. 4 to 8, (a) shows the measurement results when using the high concentration hydrogen gas as the sample gas, (b) shows the measurement results when using the low concentration hydrogen gas as the sample gas, (c) shows the measurement results when using the hydrogen sulfide gas as the sample gas, and (d) shows the measurement results when using the carbon monoxide gas as the sample gas.

**[Table 1]**

| | **PLATINUM WIRE** | **GOLD WIRE** | **TUNGSTEN WIRE** | **TANTALUM WIRE** | **NIOBIUM WIRE** |
|---|---|---|---|---|---|
| **LOW CONCENTRATION HYDROGEN GAS** | -175mV | -15mV | 1mV | 6mV | -4mV |
| **HIGH CONCENTRATION HYDROGEN GAS** | -735mV | -600mV | -200mV | -148mV | -5mV |
| **HYDROGEN SULFIDE GAS** | -51mV | -116mV | -2mV | 3mV | 0mV |
| **NITROGEN GAS** | -12mV | 0mV | -0mV | 3mV | 0mV |
| **NITROGEN MONOXIDE GAS** | -21mV | -4mV | -1mV | -3mV | -1mV |
| **CARBON MONOXIDE GAS** | -29mV | -4mV | 1mV | 1mV | -0mV |
| **ETHANOL GAS** | 3mV | 1mV | -4mV | 3mV | 5mV |

Table 1 shows maximum values of the potential variations at the time of feeding the sample gases for 60 seconds, from potentials at the time of feeding the air.

According to the above results, it has become apparent that the spontaneous potential of the niobium wire does not vary or hardly varies, when any of the nitrogen gas, the low concentration hydrogen gas, the high concentration hydrogen gas, the nitrogen monoxide gas, the hydrogen sulfide gas, the carbon monoxide gas, and the ethanol gas is fed. Thus, it has been confirmed that the niobium wire is inert to the nitrogen gas, the hydrogen gas, nitrogen oxide gases such as the nitrogen monoxide gas, sulfur compound gases such as the hydrogen sulfide gas, the carbon monoxide gas, and alcohol gases such as the ethanol gas.

As to the tungsten wire and the tantalum wire, it has become apparent that although the spontaneous potential varies when the high concentration hydrogen gas is fed, the variations thereof are smaller than those of the platinum wire, and the spontaneous potential does not vary or hardly varies when any of the nitrogen gas, the low concentration hydrogen gas, the nitrogen monoxide gas, the hydrogen sulfide gas, the carbon monoxide gas, and the ethanol gas is fed. Thus, it has been confirmed that the tungsten wire and the tantalum wire are less active to the high concentration hydrogen gas than the platinum wire, and inert to the low concentration hydrogen gas, the nitrogen gas, the nitrogen oxide gases such as the nitrogen monoxide gas, the sulfur compound gases such as the hydrogen sulfide gas, the carbon monoxide gas, and the alcohol gases such as and the ethanol gas.

As to the gold wire, it has become apparent that although the spontaneous potential varies when any of the low concentration hydrogen gas, the high concentration hydrogen gas, and the hydrogen sulfide gas is fed, the variations thereof at the time of feeding the low concentration hydrogen gas or the high concentration hydrogen gas are smaller than those of the platinum wire, and the spontaneous potential does not vary or hardly varies when any of the nitrogen gas, the nitrogen monoxide gas, the carbon monoxide gas, and the ethanol gas is fed. Thus, it has been confirmed that the gold wire is less active to the hydrogen gas than the platinum wire, and inert to the nitrogen gas, the nitrogen oxide gases such as the nitrogen monoxide gas, the carbon monoxide gas, and the alcohol gases such as and the ethanol gas.

On the other hand, it has become apparent that the spontaneous potential of the platinum wire does not vary or hardly varies when any of the nitrogen gas and the ethanol gas is fed, but the spontaneous potential thereof largely varies when any of the low concentration hydrogen gas, the high concentration hydrogen gas, the carbon monoxide gas, and the hydrogen sulfide gas is fed.

### [Experimental Example 2]

A bipolar experiment device (hereinafter also called "experiment device (2)") having working electrodes 103 and a counter electrode 104 was manufactured as shown in FIG. 9.

The experiment device (2) included a casing 100 accommodating an electrolytic solution L. A gas-permeable hydrophobic membrane 102 was placed so as to cover a gas supply controller that was constituted of a gas inlet through hole 101 formed in the casing 100, from inside. The five working electrodes 103 were provided on the gas-permeable hydrophobic membrane 102 on the side of the electrolytic solution L. There was provided a mercury sulfate electrode as the counter electrode 104 in the casing 100, together with the five working electrodes 103, a distance away from the five working electrodes 103. As an internal liquid of the mercury sulfate electrode, a potassium sulfate (K₂SO₄) solution having a concentration of 0.35 mol/L was used.

In this experiment device (2), as the gas-permeable hydrophobic membrane 102, a circular porous PTFE membrane having a porosity of 30%, a thickness of 0.2 mm, an outside diameter of 4 mm, and a Gurley number of 300 seconds was used. The five working electrodes 103 provided on the gas-permeable hydrophobic membrane 102 so as to be away from each other were each made of a disk-shaped electrode catalyst layer having a diameter of 4 mm. The five working electrodes 103 included a platinum black electrode made of platinum black, two iridium oxide electrodes made of an iridium oxide (IrO₂), and two ruthenium oxide electrodes made of a ruthenium oxide (RᵤO₂). To be more specific, the platinum black electrode was formed by firing platinum black together with a binder of FEP at a firing temperature of 320°C into a thickness of 0.3 mm. The two iridium oxide electrodes were each formed by firing iridium oxide fine particles having a particle diameter of not more than 75 µm and a specific surface of 15.±5.0 m²/g together with a binder of FEP at a firing temperature of 320°C into a thickness of 0.3 mm. The two ruthenium oxide electrodes were each formed by firing ruthenium oxide fine particles having a specific surface of 125±25 m²/g together with a binder of FEP at a firing temperature of 320°C into a thickness of 0.3 mm.

In the experimental device (2), the five working electrodes 103 and the counter electrode 104 were each connected to an experimental controller 109 with tantalum lead members 108. As an electrolytic solution L, a sulfuric acid having a concentration of 9 mol/L was used.

FIG. 9 shows only one of the five working electrodes 103.

In the experimental device (2) manufactured, an electrometer was used as the experimental controller 109. The electrometer was able to measure a potential difference by connecting a high resistance between the working electrode 103 and the counter electrode 104 with almost no flow of an electric current.

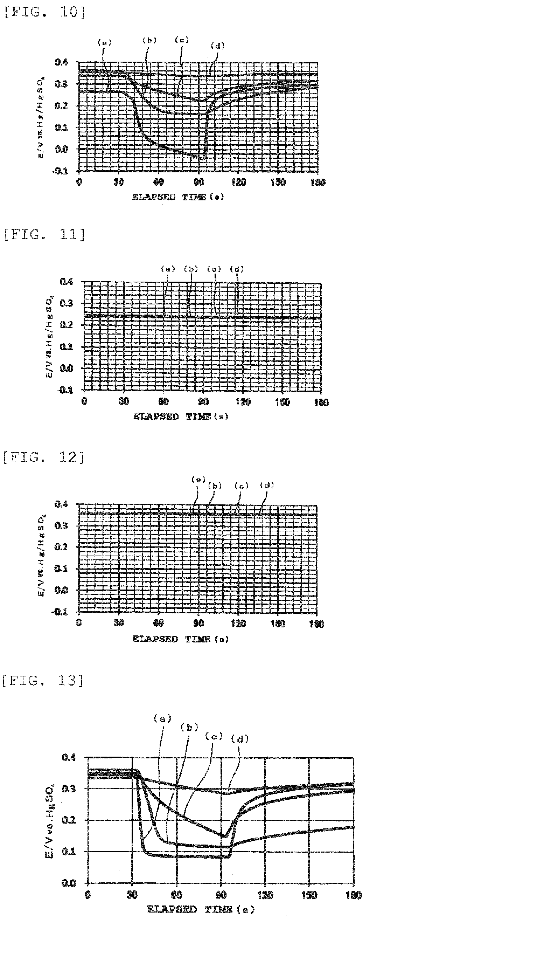

After air was supplied to the five working electrodes 103 at a time at a flow rate of 0.5 L/min by a forced method for 30 seconds, a sample gas was supplied for 60 seconds. After that, air was supplied again for additional 30 seconds. While the air, the sample gas, and the air were supplied in this manner, the potential of each working electrode 103 relative to the counter electrode 104 was measured. As the sample gases, a hydrogen gas (a concentration of 2.01% by being diluted with a nitrogen gas), an ethanol gas (a concentration of 2% by being diluted with air), a carbon monoxide gas (a concentration of 3060 ppm by being diluted with a nitrogen gas), and a hydrogen sulfide gas (a concentration of 28.8 ppm by being diluted with a nitrogen gas) were used. FIGS. 10 to 12 and Table 2 show results.

FIG. 10 shows the measurement results of the potential of the platinum black electrode. FIG. 11 shows the measurement results of the potential of one of the two iridium oxide electrodes. FIG. 12 shows the measurement results of the potential of one of the two ruthenium oxide electrodes. In FIGS. 10 to 12, (a) shows the measurement results when using the hydrogen gas as the sample gas, (b) shows the measurement results when using the ethanol gas as the sample gas, (c) shows the measurement results when using the carbon monoxide gas as the sample gas, and (d) shows the measurement results when using the hydrogen sulfide gas as the sample gas.

**[Table 2]**

| | **HYDROGEN GAS** | **CARBON MONOXIDE GAS** | **HYDROGEN SULFIDE GAS** | **ETHANOL GAS** |
|---|---|---|---|---|
| **PLATINUM BLACK ELECTRODE** | -303mV | -112mV | -17mV | -198mV |
| **IRIDIUM OXIDE ELECTRODE (1)** | -2mV | 0mV | -4mV | 0mV |
| **IRIDIUM OXIDE** ELECTRODE(2) | -2mV | 0mV | -4mV | 0mV |
| **RUTHENIUM** OXIDE **ELECTRODE(1)** | -1mV | 0mV | -1mV | 0mV |
| **RUTHENIUM OXIDE ELECTRODE(2)** | -1mV | 0mV | -1mV | 0mV |

Table 2 shows maximum values of potential variations at the time of feeding the sample gases for 60 seconds, from potentials at the time of feeding the air.

### [Experimental Example 3]

An experiment device (hereinafter also called "experiment device (3)") that had the same structure as the experiment device (2) other than provision of four working electrodes described below was manufactured.

The four working electrodes constituting the experiment device (3) were each made of a disk-shaped electrode catalyst layer having a diameter of 4 mm provided in a gas-permeable hydrophobic membrane. The four working electrodes included a platinum black electrode made of platinum black, a platinum monoxide electrode made of a platinum oxide (II) (PtO), a ruthenium electrode made of ruthenium (Ru), and an iridium electrode made of iridium (Ir). To be more specific, the platinum black electrode was formed by firing platinum black together with a binder at a firing temperature of 320°C, as in the case of the experimental example 2. The platinum monoxide electrode was formed by firing a platinum monoxide (II) together with a binder at a firing temperature of 320°C. The ruthenium electrode was formed by firing ruthenium together with a binder at a firing temperature of 320°C. The iridium electrode was formed by firing iridium together with a binder at a firing temperature of 320°C.

In the manufactured experimental device (3), air and sample gases were supplied on the same conditions as in the experimental example 2, and the potential of each working electrode relative to a counter electrode was measured while the air, the sample gas, and the air were supplied. As the sample gases, a hydrogen gas (a concentration of 2.01% by being diluted with a nitrogen gas), an ethanol gas (a concentration of 2% by being diluted with air), a carbon monoxide gas (a concentration of 2960 ppm by being diluted with a nitrogen gas), and a hydrogen sulfide gas (a concentration of 28.8 ppm by being diluted with a nitrogen gas) were used. FIGS. 13 to 16 and Table 3 show results.

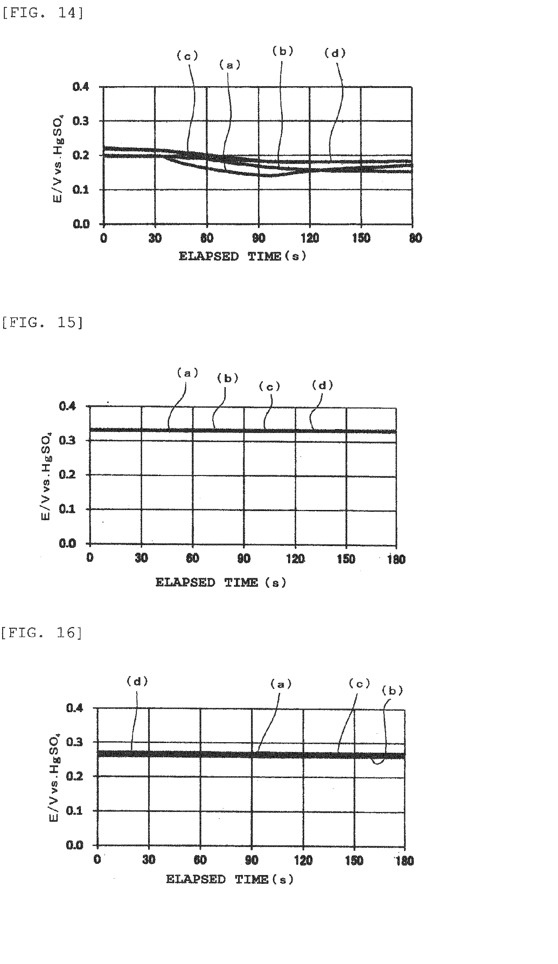

FIG. 13 shows the measurement results of the potential of the platinum black electrode. FIG. 14 shows the measurement results of the potential of the platinum monoxide electrode. FIG. 15 shows the measurement results of the potential of the ruthenium electrode. FIG. 16 shows the measurement results of the potential of the iridium electrode. In FIGS. 13 to 16, (a) shows the measurement results when using the hydrogen gas as the sample gas, (b) shows the measurement results when using the ethanol gas as the sample gas, (c) shows the measurement results when using the carbon monoxide gas as the sample gas, and (d) shows the measurement results when using the hydrogen sulfide gas as the sample gas.

**[Table 3]**

| | **HYDROGEN GAS** | **CARBON MONOXIDE GAS** | **HYDROGEN SULFIDE GAS** | **ETHANOL GAS** |
|---|---|---|---|---|
| **PLATINUM BLACK ELECTRODE** | -261 mV | -197mV | -48mV | -245mV |
| **PLATINUM MONOXIDE ELECTRODE** | -56mV | -30mV | -13mV | -46my |
| **RUTHENIUM ELECTRODE** | -1mV | 0mV | -1mV | 0mV |
| **IRIDIUM ELECTRODE** | -1mV | -1mV | -8mV | 0mV |

Table 3 shows maximum values of potential variations at the time of feeding the sample gases for 60 seconds, from potentials at the time of feeding the air.

According to the results of the above experimental examples 2 and 3, it has become apparent that when any of the hydrogen gas, the ethanol gas, the carbon monoxide gas, and the hydrogen sulfide gas is fed, the potentials of the iridium oxide electrode, the ruthenium oxide electrode, the ruthenium electrode, the iridium electrode, and the platinum monoxide electrode relative to the mercury sulfate electrode do not vary or vary with much less variations than the variation of the platinum black electrode. Thus, it has been confirmed that the iridium oxide electrode, the ruthenium oxide electrode, the ruthenium electrode, the iridium electrode, and the platinum monoxide electrode have superior potential stability so as to be capable of keeping the electrode potential at approximately constant, even if any of the hydrogen gas, the alcohol gases such as the ethanol gas, the carbon monoxide gas, and the sulfur compound gases such as the hydrogen sulfide gas comes into contact therewith. Especially, since the potentials of the iridium oxide electrode, the ruthenium oxide electrode, the ruthenium electrode, and the iridium electrode relative to the mercury sulfate electrode do not or hardly vary, it has been confirmed that the iridium oxide electrode, the ruthenium oxide electrode, the ruthenium electrode, and the iridium electrode have outstanding potential stability so as to be capable of keeping the electrode potential at approximately constant, even if any of the hydrogen gas, the alcohol gases such as the ethanol gas, the carbon monoxide gas, and the sulfur compound gases such as the hydrogen sulfide gas comes into contact therewith.

It has been confirmed that the potential of the platinum black electrode relative to the mercury sulfate electrode largely varies, when any of the hydrogen gas, the ethanol gas, the carbon monoxide gas, and the hydrogen sulfide gas is supplied.

### [Experimental Example 4]

### (Manufacture of Experiment Gas Sensors)

Two experiment gas sensors (hereinafter also called "experiment oxygen gas sensors (1)") were manufactured that had the same structure as the third potentiostatic electrolytic gas sensor shown in FIG. 1, except for using a galvanostat device instead of the controller 30, including a hole having a larger inside diameter than that of the gas inlet through hole 12 constituting the gas supply controller, and using a working electrode lead member made of a metal other than the specific metal.

In the experiment oxygen gas sensor (1), a reference electrode (23) was made of an electrode catalyst layer formed on the whole of one surface of a gas-permeable porous membrane (17).

In the experiment oxygen gas sensor (1), since a hole (hereinafter called "large diameter hole") having a larger inside diameter than that of the gas inlet through hole (12) constituting the gas supply controller was provided to supply the object gas to a working electrode (21), it became possible to produce an oxidation-reduction reaction at the working electrode (21) even if the value of a current flowing between the working electrode (21) and a counter electrode (22) was 1 mA. It is noted that in the experiment oxygen gas sensor (1), if the inside diameter of the hole to supply the object gas to the working electrode (21) is small, the supply of an oxygen gas to the working electrode (21) cannot keep up with the current of 1 mA flowing between the working electrode (21) and the counter electrode (22), so that a hydrogen generating reaction occurs at the working electrode (21) by the electrolysis of water. In other words, the oxidation-reduction reaction cannot proceed at the working electrode (21).

The experiment oxygen gas sensor (1) included a cylindrical casing (11) that had a volumetric capacity of an electrolytic solution reservoir of 3 mL, the large diameter hole having an inside diameter of 2 mm and a length of 1 mm at one end, and a gas outlet through hole (13) having an inside diameter of 2 mm and a length of 1 mm at the other end.

As an electrolytic solution (L), a sulfuric acid having a concentration of 50% was used.

As a one end-side gas-permeable hydrophobic membrane (15) and the other end-side gas-permeable hydrophobic membrane (16), disk-shaped PTFE porous membranes having a porosity of 30%, a thickness of 0.2 mm, an outside diameter of 6 mm, and a Gurley number of 300 seconds were used.

As a gas-permeable porous membrane (17), a disk-shaped PTFE porous membrane having a porosity of 30%, a thickness of 0.2 mm, an outside diameter of 6 mm, and a Gurley number of 300 seconds was used.

As the working electrode (21), a disk-shaped electrode catalyst layer having a thickness of 0.2 mm and an outside diameter of 6 mm, which was made by firing platinum black together with a binder of FEP at a firing temperature of 320°C, was used.

As the counter electrode (22), a disk-shaped electrode catalyst layer having a thickness of 0.2 mm and an outside diameter of 6 mm, which was made by firing iridium oxide fine particles of 100 parts by mass having a particle diameter of not more than 75 µm and a specific area of 15.0±5.0 m²/g together with a binder of FEP at a firing temperature of 320°C, was used.

As the reference electrode (23), a disk-shaped electrode catalyst layer having a thickness of 0.2 mm and an outside diameter of 6 mm, which was made by firing platinum black together with a binder of FEP at a firing temperature of 320°C, was used.

The electrode catalyst layers constituting the working electrode (21), the counter electrode (22), and the reference electrode (23) were formed on the whole of one surface of the one end-side gas-permeable hydrophobic membrane (15), the other end-side gas-permeable hydrophobic membrane (16), and the gas-permeable porous membrane (17), respectively, so as to support 100% of the electrode catalyst layer.

The working electrode (21), the counter electrode (22), and the reference electrode (23) were electrically connected to the galvanostat device with platinum lead members (31a, 31b, and 31c), respectively. In the experiment oxygen gas sensor (1), the working electrode (21) was connected to a counter electrode lead wire of the galvanostat device, the counter electrode (22) was connected to a working electrode lead wire of the galvanostat device, and the reference electrode (23) was connected to a reference electrode lead wire of the galvanostat device. The experiment oxygen gas sensor (1) was configured in this manner, so as to be capable of measuring the voltage of the counter electrode (22) connected to the working electrode lead wire, with respect to the reference electrode (23) connected to the reference electrode lead wire.

### (Manufacture of Comparative Experiment Gas Sensor)

Two comparative experiment oxygen gas sensors (hereinafter also called "comparative oxygen gas sensors (1)") were manufactured that had the same structure as the experiment oxygen gas sensor (1), except for using, as a counter electrode (22), a disk-shaped electrode catalyst layer having a thickness of 0.2 mm and an outside diameter of 6 mm that was made by firing platinum black together with a binder of FEP at a firing temperature of 320°C.

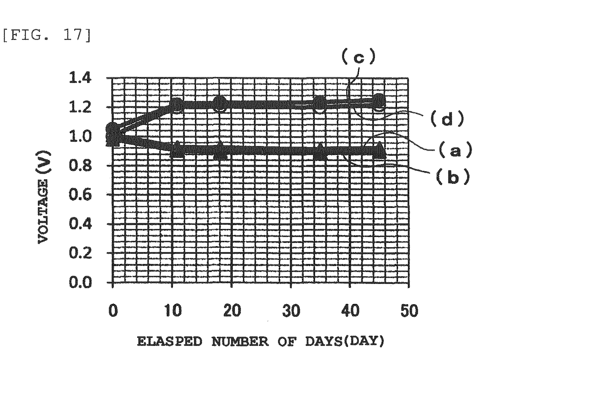

In each of the two experiment oxygen gas sensors (1) and the two comparative oxygen gas sensors (1), the galvanostat device flowed a current of 1 mA between the working electrode (21) and the counter electrode (22) under environmental conditions of a temperature of 25°C and a humidity of 30% RH. A voltage (a voltage applied to the counter electrode) that was required to produce a reduction reaction represented by the following equation (1) at the working electrode (21) and an oxidation reaction represented by the following equation (2) at the counter electrode (22) was measured for 45 days. FIG. 17 shows results. In FIG. 17, the measurement values of the two experiment oxygen gas sensors (1) are plotted with white rectangles and solid rectangles. The measurement values of the two comparative oxygen gas sensors (1) are plotted with white circles and solid circles.

In the experiment oxygen gas sensors (1) and the comparative oxygen gas sensors (1), air was supplied to the working electrode (21) through the large diameter hole and the one end-side gas-permeable hydrophobic membrane (15), and an oxygen gas contained in the supplied air was reduced by the reduction reaction represented by the equation (1) during the measurement of 45 days. At the counter electrode (22), an oxygen gas was generated by the oxidation reaction represented by the equation (2), and ejected outside through the other end-side gas-permeable hydrophobic membrane (16) and the gas outlet through hole (13).

Equation (1): O₂ + 4H⁺ + 4e⁻ → 2H₂O

Equation (2) : 2H₂O→O₂+ 4H⁺ + 4e

According to experiment results, in the experiment oxygen gas sensors (1) having the counter electrode (iridium oxide counter electrode) made of the iridium oxide, an initial overvoltage (immediately after the start of the measurement) was substantially the same as that of the comparative oxygen gas sensors (1) having the counter electrode (hereinafter also called "platinum counter electrode") made of platinum. Thus, it has been confirmed that the iridium oxide has high conductivity, and the iridium oxide counter electrode has substantially the same conductivity as the platinum counter electrode.

In the experiment oxygen gas sensors (1), as shown by a curve (a) plotted with the white rectangles and a curve (b) plotted with solid rectangles in FIG. 17, the overvoltage was almost at constant for a long period of time. Thus, it has been confirmed that the conductivity of the iridium oxide counter electrode is kept at constant for a long period of time, and thereby gas detection can be stably performed at substantially the same voltage for a long period of time.

On the other hand, in the comparative oxygen gas sensors (1), as shown by a curve (c) plotted with the white circles and a curve (d) plotted with solid circles in FIG. 17, the overvoltage increased with time in an initial period (between the start of the measurement and 10 days thereafter, in the concrete). Thus, it has been confirmed that gas detection requires the application of a high voltage.

### REFERENCE SIGNS LIST

- 11: casing
- 12: gas inlet through hole
- 13: gas outlet through hole
- 15: one end-side gas-permeable hydrophobic membrane
- 16: the other end-side gas-permeable hydrophobic membrane
- 17: gas-permeable porous membrane
- 21: working electrode
- 22: counter electrode
- 23: reference electrode
- 30: controller
- 31a: working electrode lead member
- 31b: counter electrode lead member
- 31c: reference electrode lead member
- 40: potentiostatic electrolytic oxygen gas sensor
- 41: casing
- 42: gas-permeable hydrophobic pressure control membrane
- 43: coupling hole
- 45: sensing portion formation space
- 50: top side protection plate
- 50A: through hole
- 55: working electrode
- 56: counter electrode
- 57: reference electrode
- 60: plate-shaped lid member
- 61: pin hole
- 65: bottom side protection plate
- 65A: through hole
- 70: cap member
- 70A: gas outlet through hole
- 81: container
- 82: side surface
- 84: porous PTFE membrane
- 85: filter paper
- 87: mercury sulfate electrode
- 88: gas passage
- 89: pump
- 91a, 91b, 91c, 91d, 91e: metal wire
- 93: gas supply source
- 100: casing
- 101: gas inlet through hole
- 102: gas-permeable hydrophobic membrane
- 103: working electrode
- 104: counter electrode
- 108: lead member
- 109: experimental controller
- L: electrolytic solution
- S: electrolytic solution reservoir

## Claims

1. A potentiostatic electrolytic gas sensor comprising: a working electrode and a counter electrode provided inside a casing with an electrolytic solution interposed therebetween; a working electrode lead member that is drawn out of the casing at one end and electrically connected to the working electrode at the other end; and a counter electrode lead member that is drawn out of the casing at one end and electrically connected to the counter electrode at the other end, wherein
at least one of the working electrode lead member and the counter electrode lead member is made of a metal selected from gold, tungsten, niobium, and tantalum.

2. The potentiostatic electrolytic gas sensor according to claim 1, wherein the working electrode lead member is made of a metal selected from gold, tungsten, niobium, and tantalum.

3. A potentiostatic electrolytic gas sensor comprising: a working electrode, a counter electrode, and a reference electrode provided inside a casing with an electrolytic solution interposed among the electrodes; and a reference electrode lead member that is drawn out of the casing at one end and electrically connected to the reference electrode at the other end, wherein
the reference electrode lead member is made of a metal selected from gold, tungsten, niobium, and tantalum.

4. The potentiostatic electrolytic gas sensor according to claim 2, wherein a gas to be detected is an oxygen gas, and
the working electrode is made of metal black selected from platinum black and gold black.

5. The potentiostatic electrolytic gas sensor according to claim 4, comprising a reference electrode provided inside the casing with the electrolytic solution interposed between the working electrode and the reference electrode and between the counter electrode and the reference electrode; and a reference electrode lead member that is drawn out of the casing at one end, and electrically connected to the reference electrode at the other end, and wherein
the reference electrode is made of a material selected from iridium, an iridium oxide, ruthenium, a ruthenium oxide, and a platinum oxide.

6. The potentiostatic electrolytic gas sensor according to claim 4 or 5, wherein the reference electrode lead member is made of a metal selected from tantalum, gold, tungsten, and niobium.

7. The potentiostatic electrolytic gas sensor according to any one of claims 4 to 6, wherein the counter electrode is made of an iridium oxide.

8. A potentiostatic electrolytic gas sensor comprising a working electrode, a counter electrode, and a reference electrode provided inside a casing with an electrolytic solution interposed among the electrodes, wherein
the reference electrode is made of a material selected from iridium, an iridium oxide, ruthenium, a ruthenium oxide, and a platinum oxide.

9. The potentiostatic electrolytic gas sensor according to claim 8, comprising a reference electrode lead member that is drawn out of the casing at one end and electrically connected to the reference electrode at the other end, and wherein
the reference electrode lead member is made of a metal selected from tantalum, gold, tungsten, and niobium.
